# EUROPÄISCHE PATENTANMELDUNG

(11) **EP 0 982 177 A1**
(43) Veröffentlichungstag der Anmeldung: **01.03.2000**
(21) Anmeldenummer: 99203793.7
(22) Anmeldetag: 30.09.1998
(51) Int. Cl.: B60N 2/00

(54) **Einrichtung für das Einstellen der Stelle eines Sitzes in ein Fahrzeug**

(30) Priorität: 30.09.1997 NL 1007180
(62) Teilanmeldung aus: 98203282.3
(71) Anmelder: Van Ee, Teunis Karel, 3771 MB Barneveld (NL)
(72) Erfinder: Van Ee, Teunis Karel, 3771 MB Barneveld (NL)
(74) Vertreter: Ferguson, Alexander

(57) **Zusammenfassung**

Die Erfindung bezieht sich auf eine Einrichtung für das Einstellen der Stelle eines Sitzes in ein Fahrzeug, insbesondere in ein Tretauto, wobei der Sitz stufenlos durch Klemmittel auf einer Führung einzustellen ist.

## Beschreibung

Die Erfindung bezieht sich auf eine Einrichtung für das Einstellen der Stelle eines Sitzes in ein Fahrzeug, insbesondere in ein Tretauto, wobei der Sitz stufenlos durch Klemmittel auf eine Führung einzustellen ist.

Derartige Einrichtungen sind bekannt und ermöglichen es den Sitz auf jeder Stelle an einer bestimmten Strecke der Führung entlang festzusetzen, zum Beispiel aus der Amerikanischen Patentschrift US-A-5509678. Die Patentschrift zeigt ein Sesselrad welcher Sessel durch zwei Gleitblöcke stufenlos auf zwei Flanschen einer Führung zu klemmen und zu schieben ist. Die Flanschen sind auf einer Führung befestigt. Die beiden Gleitblöcke klemmen die beiden Flanschen durch eine Ausfallnabe horizontal. Eine solche Klemmung ist weder steif noch stabil.

Weiterhin sind Tretautos bekannt wobei unter dem Sitz zwei vertikale Führungsplatten angebracht sind, die entlang einen Kastenträger schieben können und die mit Hilfe eines Bolzens gegen die Seiten des Kastenträgers festzuklemmen sind. Nach einer anderen Ausführung ist ein Stück Kastenprofil über eine Führung verschiebbar und mit einem Bolzen festzusetzen.

Die bekannten Ausführungen haben den Nachteil, daß ein Kind mit die Finger leicht zwischen die Klemmittel oder zwischen eine der Klemmittel und die Schiene geraten kann.

Es ist ein Zweck der Erfindung eine stufenlos einstellbare Einstelleinrichtung zu verschaffen, die leicht zu bedienen und gefahrlos ist. Weiterhin soll die Einstelleinrichtung robust sein und eine steife Konstruktion haben.

Nach einem ersten Aspekt der Erfindung wird dieses Ziel mit einer Einrichtung der im Anfang erwähnten Art erreicht, wobei der Sitz stufenlos durch mindestens zwei Klemmittel auf eine Scheine einzustellen und festklemmbar ist, wobei die Schiene mindestens einen Klemmstreifen umfaßt wobei der Klemmstreifen zwischen die Klemmittel läuft und die Klemmittel den Klemmstreifen zwischen sich klemmen. Durch die Klemmung auf den Seiten des Streifens wird eine stabile Klemmung erhalten.

Vorzugsweise sind die Klemmittel Klemmblöcke, vorzugsweise längliche Klemmblöcke. Nach einer Vorzugsausführung umfassen die Klemmittel mindestens zwei längliche Klemmblöcke, die beiderseitig von einem Klemmstreifen der Schiene zu der Schiene parallel verlaufen, um den Klemmstreifen zwischen sich zu klemmen. Die Klemmblöcke können beim Verstellen des Sitzes also entlang die Schiene verschieben, und den Sitz festsetzen durch sich beiderseitig vom Klemmstreifen zum Klemmstreifen zu bewegen en darauf festzuklemmen.

Vorzugsweise umfaßt das Einstelleinrichtung einen Hauptkörper, an dem die Klemmblöcke angeordnet sind. Die Einrichtung umfaßt Klemmeinrichtungen, wodurch der Abstand zwischen den Klemmblöcken einzustellen ist und der Abstand zugleich abnimmt und die Klemmblöcke den Klemmstreifen der Schiene zwischen sich klemmen werden. Ein erstes Teil der Klemmeinrichtung ist an einem ersten Klemmblock befestigt, und ein zweites Teil an einem zweiten Klemmblock. Der Abstand zwischen den Klemmblöcken kann derart gewählt werden, daß kein Finger einer (Kinder)hand zwischen Klemmstreifen und Klemmblock gesteckt werden kann.

Es ist möglich für die Schiene ein I-Profil zu benutzen. Nach einer Vorzugsausführung ist die Schiene jedoch ein Kastenprofil mit einer teilweise offenen Oberseite mit mindestens einem Klemmstreifen für die Klemmblöcke, wovon mindestens ein in dem Kastenprofil beweglich ist und ein oben dem Kastenprofil beweglich ist, wobei der Hauptkörper teilweise im Kastenprofil aufgenommen ist. Hierdurch entsteht eine gute Führung der Klemmblöcke und ist das verschiebbare Teil der Einrichtung teilweise im Profil aufgenommen, so daß es minder Beschädigungsgefahr gibt. Zugleich dient das Kastenprofil als Querführung.

Vorzugsweise ist beiderseitig von der Öffnung in der Oberseite des Kastenprofils ein Klemmstreifen vorhanden, und sind an beiden Seiten des Hauptkörpers zwei Klemmblöcke vorhanden um auf beide Klemmstreifen zu klemmen. Hierdurch entsteht eine steife Konstruktion, wodurch Torsion durch Querkräfte, vom Benutzer ausgeübt, gut widerstanden werden kann.

Vorzugsweise besitzt der Hauptkörper im Kastenprofil eine Anschlagfläche, die als Lauffläche beim Verstellen des Sitzes dient, wodurch der Hauptkörper bei Entriegeln nicht al zu weit zurückschwenken kann und das Einstellorgan eine extra Führung im Kastenprofil besitzt.

Vorzugsweise liegt der Schwerpunkt des Hauptkörpers, des Hauptkörpers plus Sitzes und des Hauptkörpers plus Sitzes plus Benutzers in horizontaler Richtung auf dem Abstand von den Stiften mit Klemmblöcken, um eine gute Klemmung zu gewährleisten, so daß das Gewicht des Hauptkörpers, des Sitzes und des Benutzers ein Moment aufliefern, daß die Klemmblöcke mit Sicherheit festklemmt.

Nach einer Vorzugsausführung ist am Hauptkörper eine Hülse für das Aufnehmen eines Stiftes an einem abmontierbaren Sitz befestigt.

Die Erfindung wird hierunter anhand einer Vorzugsausführung erläutert werden, unter Bezug auf die Zeichnung.
Figur 1 zeigt die Einrichtung laut der Erfindung in Seitenansicht, in entriegeltem Stand.
Figur 2 zeigt die Einrichtung laut Figur 1 im Querschnitt laut Linie II-II.
Figur 3 zeigt die Einrichtung laut Figur 1 in verriegeltem Stand.
Figur 4 zeigt die Einrichtung laut Figur 3 im Querschnitt laut Linie IV-IV.

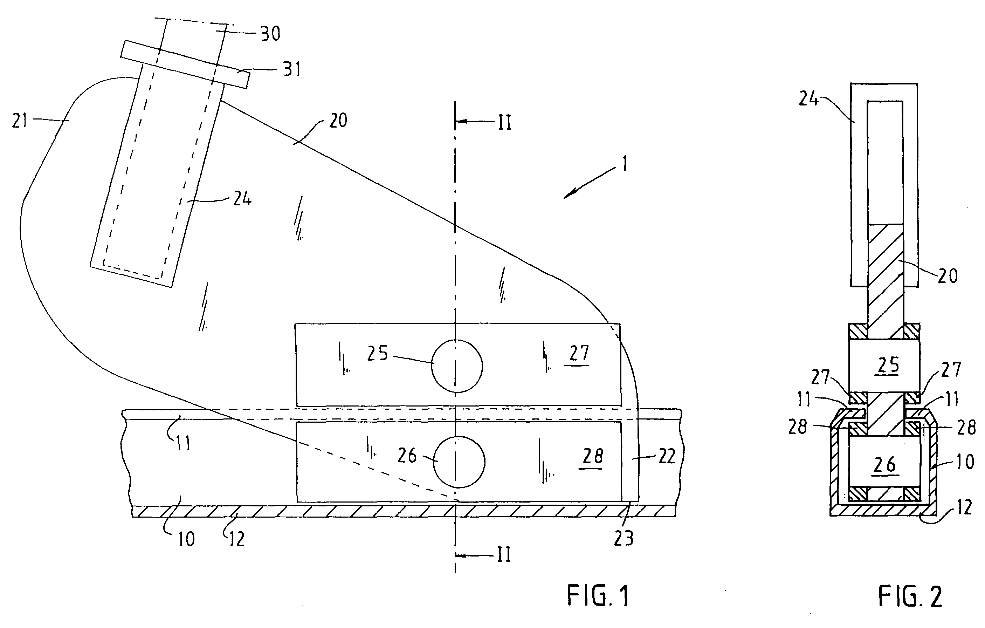

Figur 1 zeigt die Einrichtung laut der Erfindung die aus einem Einstellorgan, das verschiebbar entlang und klemmbar auf eine Schiene 10 ist, besteht. Die Schiene 10 hat die Form eines Kastenprofils mit einem Boden 12 und eine in Längsrichtung offene Oberseite, wovon die Längsöffnung von zwei horizontalen, nach einander gerichteten Flanschen 11 begrenzt ist. Die Schiene 10 wird in Figur 1 im Querschnitt gezeigt.

Das Einstellorgan 1 besteht aus einem Hauptkörper 20 mit einer Vorderseite 21 und einer Hinterseite 22. Bei der Vorderseite 21 ist ein rechteckiges Kastenprofil 24 befestigt für das Aufnehmen eines Stiftes 30 der an einem Sitz (nicht gezeigt) festsitzt. Am Stift 30 ist ein Anschlag 31 befestigt, um einen Sitz auf das Kastenprofil 24 abzustützen.

In der Nähe von der Hinterseite 22 des Hauptkörpers 20 des Einstellorgans 1 sind oben einander zwei Stifte 25, 26 angeordnet, die frei in übereinstimmenden Löchern im Hauptkörper 20 drehen können. Beiderseitig vom Hauptkörper 20 sind zwei längliche Klemmblöcke 27 am Stift 25 befestigt, wovon die Unterfläche in derselben Ebene liegen. Ebenso sind beiderseitig vom Hauptkörper 20 zwei Klemmblöcke 28 am Stift 26 befestigt, wovon die Oberflächen in derselben Ebene liegen. Die untersten Klemmblöcke 28 sind in montiertem Zustand im Kastenprofil 10 aufgenommen und sind darin verschiebbar ohne zu schränken.

Figur 2 zeigt einen Querschnitt der Einrichtung laut Figur 1 entlang die Querschnittsfläche II-II durch die Stifte 25 und 26.

Figur 1 und Figur 2 zeigen die Einrichtung, wobei das Einstellorgan 1 entriegelt ist, d.h. nicht auf dem Kastenprofil 10 festgeklemmt ist und deshalb frei verschiebbar entlang das Kastenprofil 10 ist. In diesem Stand ist der Abstand zwischen den Klemmblöcken 27 und 28 größer als die Dicke der Flansche 11. Das Hinterende 22 des Hauptkörpers 20 besitzt eine Anschlagfläche 23, die in entriegeltem Zustand gegen den Boden 12 des Kastenprofils 10 anliegen kann und also eine Gleitfläche bildet beim Verschieben des Einstellorgans 1, um den Sitz in einen anderen Stand zu setzen. Die Anschlagfläche 23 dient auch dafür zu sorgen, daß der Hauptkörper 20 nicht weiter nach rechts kippen kann, so daß das Einstellorgan 1 einstellbar bleibt.

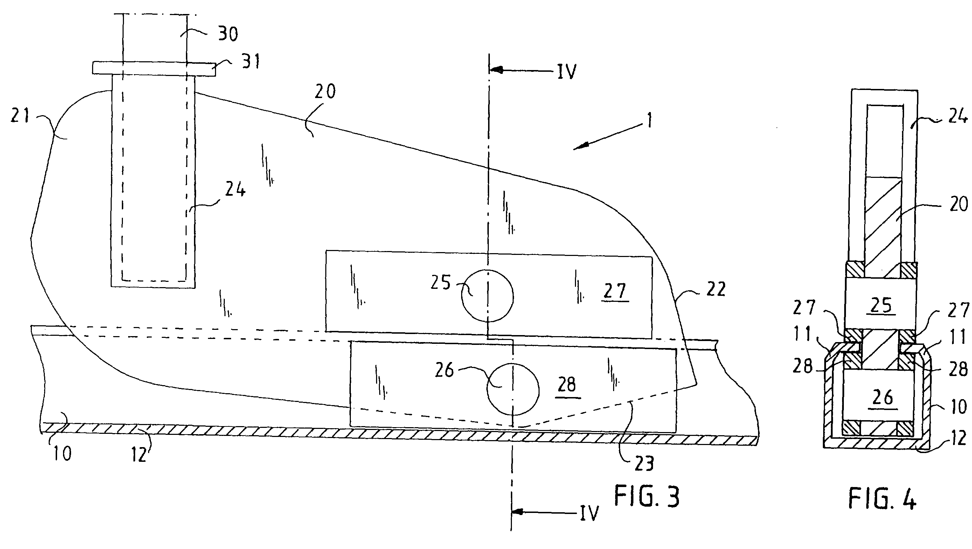

Wenn der gewünschte Stand des Sitzes gefunden ist, wird die Vorderseite 21 des Hauptkörpers 20 nach unten gedrückt, wodurch der Hauptkörper 20 nach links rund die Stifte 25 und 26 kippt, wodurch der verriegelte Stand laut Figur 3 entsteht. Durch das Kippen des Hauptkörpers 20 nimmt der vertikale Abstand zwischen den Stiften 25 und 26 ab. Hierdurch nimmt auch der Abstand zwischen den Klemmblöcken 27 und den Klemmblöcken 28 ab, bis dieser Zwischenabstand der Dicke der Flansche 11 entspricht. Durch vertikale Kraftausübung nach unten auf dem Vorderteil 21 des Hauptkörpers 20 werden die Flanschen 11 zwischen die Klemmblöcke 27 und 28 geklemmt, wodurch das Einstellorgan 1 auf der Schiene 10 verriegelt ist.

Figur 4 zeigt den verriegelten Stand von Figur 3 im Querschnitt entlang die Durchschnittfläche IV-IV durch die Stifte 25 und 26 in Figur 3.

Die Klemmung der Klemmblöcke 27 und 28 kommt zustande durch das eigene Gewicht von Hauptkörper 20, das ein Moment um die Stifte 25 und 26 ausübt. Durch das Gewicht des Sitzes am Stift 30 im vertikalen Profil 24 nimmt das Klemmoment noch zu und das Gewicht des Gebrauchers im Sitz wird das Klemmoment noch weiter zunehmen lassen, so daß während Gebrauch keine Gefahr für Entriegelung oder verschiebung des Einstellorgans 1 entlang die Schiene 10 besteht.

Um das Einstellorgan 1 zu entriegeln braucht das Vorderteil 21 des Hauptkörpers 20 nur aufgehoben zu werden. Hierdurch entriegeln die Klemmblöcke 27 und 28 automatisch und ist das Einstellorgan 1 wieder entlang die Schiene 10 verschiebbar.

Laut einer anderen Bauweise (nicht gezeigt) besitzen die Klemmblöcke 27, 28 ein an der Seite hinausstreckendes zylindrisches Teil, das drehbar in den Löchern im Hauptkörper 20 aufgenommen ist. Die Stifte 25, 26 können dann verfallen. Die obersten Klemmblöcke 27 müssen aneinander festgesetzt werden mit z.B. einem Paßbolzen, aber bei unstersten Klemmblöcken 28 ist das nicht notwendig, weil deise im Kastenprofil 10 aufgenommen sind.

Die Klemmblöcke sind vorzugsweise aus einem verschließfeste Kunststoff, wie Nylon, hergestellt.

Die Einrichtung laut der Erfindung hat den Vorteil, daß diese einfach und robust ist, und daß kein Einstellhebel erforderlich ist, um die Einrichtung zu bedienen. Auch ist keine Feder notwendig um den Einstellorgan zu verriegeln, so daß auch kein Risiko auf Federbruch besteht. Die Einrichtung ist derart auszuführen, daß der maximale Abstand zwischen den Klemmblöcken 27 und den Flanschen 11 so klein ist, daß ein Finger eines (Kinder)handes da nie zwischen gebracht werden kann, so daß die Einrichtung auch Kindsicher ist, was besonders für Tretautos von großer Wichtigkeit ist.

## Patentansprüche

1. Einrichtung für das Einstellen der Stelle eines Sitzes in ein Fahrzeug, insbesondere in ein Tretauto, wobei der Sitz stufenlos durch mindestens zwei Klemmittel auf eine Schiene einzustellen und festklemmbar ist, wobei die Schiene mindestens einen Klemmstreifen umfaßt wobei der Klemmstreifen zwischen die Klemmittel läuft und die Klemmittel den Klemmstreifen zwischen sich klemmen.

2. Einrichtung gemäß Anspruch 1, wobei die Klemmmittel die Klemmstreifen an ihren fläche Seiten anklemmen.

3. Einrichtung gemäß Anspruch 1 oder 2, wobei die Klemmittel beiderseitig von dem Klemmstreifen zu der Schiene parallel verlaufen, um den Klemmstreifen zwischen sich zu klemmen.

4. Einrichtung gemäß Anspruch 1, 2 oder 3, wobei die Klemmmittel führungsgemäß über die Scheine laufen.

5. Einrichtung nach einem der vorhergehenden Ansprüche, wobei die Schiene ein Kastenprofil ist mit wenigstens einer teilweise offenen Oberseite mit mindestens einem Klemmstreifen für die Klemmmittel, wovon mindestens ein in dem Kastenprofil beweglich ist und ein oben dem Kastenprofil beweglich ist.

6. Einrichtung nach einem der vorhergehenden Ansprüche, wobei das Kastenprofil zwei Klemmstreifen hat.

7. Einrichtung nach einem der vorhergehenden Ansprüche, wobei beiderseitig von der Öffnung in der Oberseite des Kastenprofils ein Klemmstreifen vorhanden ist und es an beiden Seiten des Klemmstreifens Klemmmittel gibt um auf beide Klemmstreifen zu klemmen.

8. Einrichtung nach einem der vorhergehenden Ansprüche, wobei die Klemmittel Klemmblöcke sind.

9. Einrichtung nach einem der vorhergehenden Ansprüche, wobei die Klemmblöcke länglich sind.

10. Einrichtung nach einem der vorhergehenden Ansprüche, wobei der maximale Abstand zwischen dem Klemmblock und der Außenseite des Kastenprofils kleiner ist als die Dicke eines Fingers eines Kinderhandes.
